# EUROPEAN PATENT APPLICATION

(11) **EP 0 801 110 A2**
(43) Date of publication of application: **15.10.1997**
(21) Application number: 97201889.9
(22) Date of filing: 04.11.1991
(51) Int. Cl.: C08L 81/06, C08L 79/08

(54) **Resin bodies comprising a combination of thermoplastic and thermoset resin**

(30) Priority: 13.11.1990 US 612779
(62) Divisional of application: 91310167.1
(71) Applicant: ICI COMPOSITES INC., Tempe, Arizona 85043 (US)
(72) Inventor: Mackenzie, Paul, Dominic, Chandler, Arizona 85224 (US); Malhotra, Vinay, Tempe, Arizona 85282 (US)
(74) Representative: Allen, Philippa Margaret

(57) **Abstract**

The present invention is directed to curable compositions comprised of a cyanate ester thermoset and a thermoplastic component comprising a polyarylsulphone and a reactive modifier, structures made by curing the compositions and methods for the manufacture thereof.

## Description

### Background

The present invention is directed to a combined thermoplastic and thermoset resin system producing a resin body with improved toughness comprising compositions wherein a single and/or a plurality of morphologies can be controllably formed. The controllably formed morphologies are characterised as homogeneous, particulate, cocontinuous, phase-inverted and/or some combination thereof and therebetween.

It is known in this art that adding certain modifiers to the matrix of a thermoset resin, may by way of example toughen the resin against collision events. As those skilled in this art know, trade-offs between modulus, service temperature, and toughness often occur when compositions of resin systems are altered. These trade-offs are manifested in physical property and morphological changes which may or may not be an advantage in the final use of the composed material. One such trade-off occurs when rubber is added to a neat resin. The toughness of the rubberised resin system increases, however, both modulus and service temperature are seen to decline.

Until recently, for example in US Serial No 391,279, filed 9 August 1989, herein incorporated by reference as filed, morphological correctedness to physical property enhancement was scarcely noted. The present invention teaches toughened compositions of thermoplasts combined with thermoset resin systems and provides means to obtain certain morphologies found advantageous for end use purposes.

The bodies of toughened thermoset resin systems are found to be useful as structural materials in a range of applications. Sports devices, building materials, aeronautical, land and nautical vehicles have all found light weight carbon-based tough materials give enhanced performance. The present invention fits into this class of materials.

### Description of the Drawings

Figure 1 is a TEM micrograph of phase-inverted morphology of the resin body.

Figure 2 is a TEM micrograph of cocontinuous morphology of the resin body.

### Summary of the Invention

The resin system of the present invention comprises a combination of thermoset and thermoplastic resins wherein the thermoplast comprises a polyarylsulphone or polyimide component and a thermoset component consisting essentially of a di/poly cyanate esters, maleimide, and/or oligomers and/or combinations thereof and reactive modifier.

The thermoset and thermoplastic resin system consists essentially of 1 to 98 weight percent thermoset preferably 30-90 weight percent, most preferably 30-85 weight percent thermoset selected from composition A, 1 to 98 weight percent thermoplast preferably 5-50 weight percent, most preferably 15-40 weight percent thermoplast selected from composition B and/or C, 1 to 98 weight percent reactive modifier preferably 1-60 weight percent most preferably 1-50 weight percent reactive modifier, 0 to 5 weight percent catalyst, and 0 to 5 weight percent radical quencher.

The thermoset component, herein denoted as composition A, consists essentially of reactive functionalities such as di/polycyanate esters, maleimides and/or oligomers and/or combinations therof. The dicyanate ester resin system consists essentially of one or more compounds of the general formula NCOAr(Yₓ,Arₘ)_{q}OCN and oligomers and/or polycyanate esters and combinations thereof wherein Ar is a single or fused aromatic or substituted aromatics and combinations thereof and therebetween nucleus linked in the ortho, meta and/or para position and x, m and q are as defined below. The Y is a linking unit selected from the group consisting of oxygen, carbonyl, sulphur, sulphur oxides, chemical bond, aromatic linked in ortho, meta and/or para positions and/or CR₁R₂ wherein R₁ and R₂ are hydrogen, halogenated alkanes, such as the fluorinated alkanes and/or substituted aromatics and/or hydrocarbon units wherein said hydrocarbon units are singularly or multiply linked and consist of up to 20 carbon atoms for each R₁ and/or R₂ and P(R₃R₄R'₄R₅) wherein R₃ is alkyl, aryl, alkoxy or hydroxy, R'₄ may be equal to R₄ and a singly linked oxygen or chemical bond and R₅ is doubly linked oxygen or chemical bond or Si(R₃R₄R'₄R₆) wherein R₃ and R₄, R'₄ are defined as in P(R₃R₄R'₄R₅) above and R₆ is defined similar to R₃ above. Optionally, the thermoset can consist essentially of cyanate esters of phenol/formaldehyde derived Novolaks or dicyclopentadiene derivatives thereof, an example of which is XU71787 sold by the Dow Chemical Company.

Alternatively, the bis-imide (BMI) thermoset resin system consists essentially of one or more compounds of the general formula 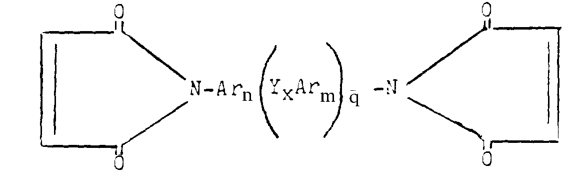 wherein n = 0 to 5 and/or m = 0 to 5 and x = 0 up to 2, q - 0 to 5 and wherein Ar is a single or fused aromatic nucleus linked in the ortho, meta and/or para position. The group Y either in combination and/or individually consists of oxygen, carbonyl, sulphur, sulphur oxides, chemical bond, aromatic linked in ortho, meta and/or para positions and/or CR₁R₂ wherein R₁ and R₂ are hydrogen, halogenated alkanes such as fluorinated alkanes and/or substituted aromatics and/or hydrocarbon units wherein said hydrocarbon units are singularly or multiply linked and consist of up to 20 carbon atoms for each R₁ and/or R₂ and P(R₃R₄R'₄R₅) wherein R₃ is alkyl, aryl, alkoxy or hydroxy, R'₄ may be equal to R₄ and a singly linked oxygen or chemical bond and R₅ is doubly linked oxygen or chemical bond or Si(R₃R₄R'₄R₆) wherein R₃ and R₄, R'₄ are defined as in P(R₃R₄R'₄R₅) above and R₆ is defined similar to R₃ above.

The polyimide, herein denoted as composition B, consists essentially of the formula 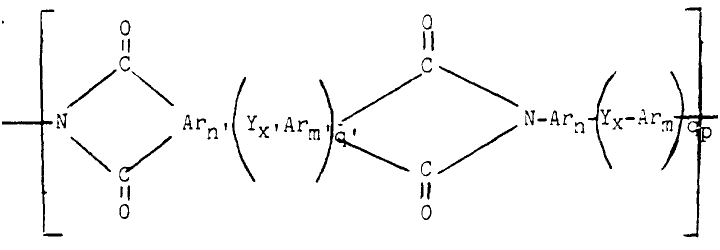 wherein Ar is a single or fused aromatic or substituted aromatics and combinations thereof and therebetween nucleus linked in the ortho, meta, and/or para position, q' and q - 0 to 5, x = 0 to 2, m and n are 0 to 5 and n', m', and x' are 0 to 2, 0 to 5, and 0 to 5, respectively including fractional stoichiometry, p is a real positive number, Y either in combination and/or individually consists essentially of carbonyl, oxygen, sulphur, alkylated silicon, sulphur oxides, cycloaliphatics, oxides, silicon oxides and/or CR₁R₂ wherein R₁ and R₂ are hydrogen, halogenated alkanes, substituted aromatics, and/or hydrocarbon units, wherein said hydrocarbon units are singly or multiply linked and consist of up to 20 carbon atoms for each R₁ and R₂ and P(R₃R₄R'₄R₅) wherein R₃ is alkyl, aryl, alkoxy or hydroxy, R'₄ may be equal to R₄ which is a singly linked oxygen or chemical bond and R₅ is doubly linked oxygen or chemical bond or Si(R₃R₄R'₄R₆) wherein R₃,R₄ and R'₄ are defined as in P(R₃R₄R'₄R₅) above and R₆ is defined similar to R₃ above.

The polyarylsulphone, herein denoted as composition C, consists essentially of ether and/or thioether linked repeating units [PhSO₂PhPhSO₂Ph]ₘ, (PhSO₂Ph)ₙ and/or (Ph)ₐ wherein Ph is phenylene, a is about 0 to 2, n is about 1 up to 2, m is about 1 up to 2. Examples of polyarylsulphones are polyethersulphones ("PES"), polyetherethersulphone ("PEES") and copolymers thereof.

For the purpose of this invention thermoset resin means a resin that reacts by addition of heat and/or catalytic activity to yield a crosslinked network that does not flow and does not lend itself to easy remoulding. The resin may comprise coreactants that form part of the network although the coreactants by themselves may not be thermosets.

The invention also includes the thermoplastic modification of resins such as bis-maleimide/cyanate blends. As with the other formulations, the addition of thermoplastic and other reactive diluents promote desirable properties.

Coreactants are used to enhance processability, control morphology and resultant properties of the resin body. Coreactants may be selected from generic groups comprising epoxies, ethylenically or ethylenically unsaturated monomers and combinations thereof. Coreactants may further include epoxy hardeners and/or catalysts. Unsaturated monomers may be selected from allyl ethers, allyl phenols, propenyl phenols, methacrylates, acrylates, combinations thereof and therebetween.

As a preferred embodiment, epoxy resins are added as a thermosetting modifier up to about 50 weight percent. Examples of useful epoxy resin precursors and bisphenol A,E,F,S, and combinations thereof. Epoxy hardeners advantageous to these precursor resins are 3,3'- or 4,4'- diamino diphenylsulphone, BF₃-amine complexes, imidazoles and their salts and combinations thereof. Epoxy hardeners have also been found to provide catalytic activity.

Catalysts used to promote the conversion of cyanate resins are selected from active hydrogen sources, for example, alkylated phenols and catalysts from the transition metal complexes selected from the first, second, and third transition series of the periodic chart and combinations thereof. The use of a radical quencher may provide greater stability to the resin system during formulation. Radical quenchers, comprises, for example, hydroquinone and derivatives thereof.

In preferred forms of this invention, there are chemical bonds bridging the interface between the two phases. As a result of this bonding, the solvent sensitivity of the system is substantially less than of the thermoplast itself in traditional solvents such as water, acetone, 2-butanone, methylene chloride, isopropanol, jet fuel, hydraulic fluid, and Skydrol.

The thermoplast preferably contains end groups and/or pendant groups of the formula -A-Y where A is optional and a divalent hydrocarbon group, preferably aromatic, and Y is a group that is reactive with one or more components of the thermoset resin to provide the aforementioned bonded interface. Examples of Y are groups providing active hydrogen, especially -OH, -NH₂, -NHR, or -SH, where R is a hydrocarbon group containing up to 8 carbon atoms. Alternatively, examples of Y are groups providing cross linking reactivity especially epoxy, cyanate, isocyanate, or unsaturated functionality such as vinyl, allyl, propenyl, acetylene, propargyl, unsaturated imide, for example maleimide or nadimide.

As those skilled in this art will come to realise, manipulating the thermoplastic backbone at various and/or periodic sites provide predictable interaction with the thermoset. Once reactive sites have been obtained with the thermoplastic, a combination of this component with the thermosetting component with the thermosetting component can provide a range of morphological characteristics. The present invention has uncovered a certain relationship between composition of thermoplast, composition of thermoset and resin system morphology.

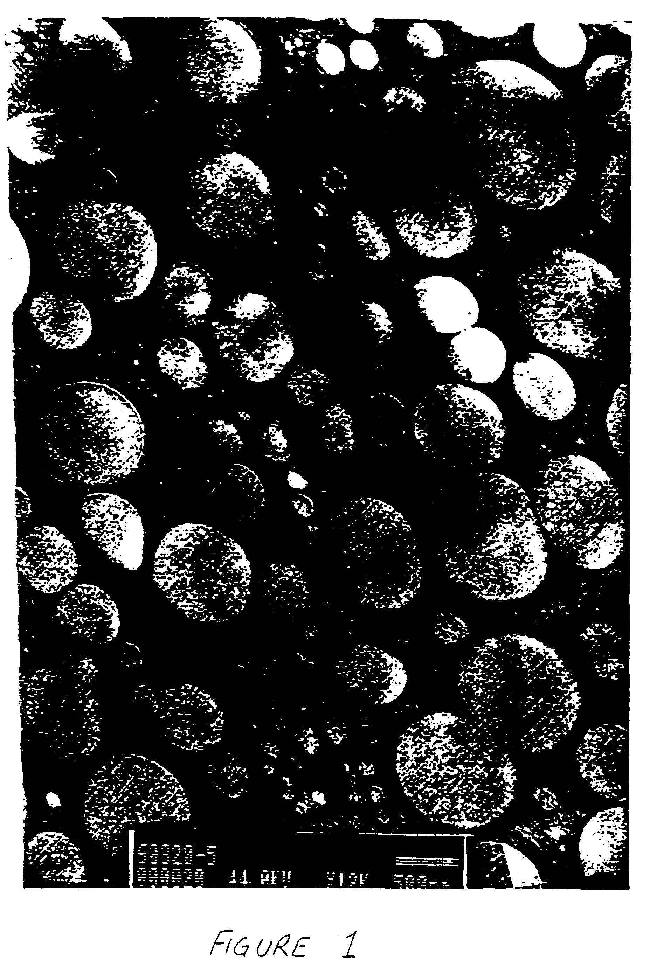

Empirical parameters have been observed which can be used to predictably and controllably form specific morphologies. The morphologies of particular interest are, individually, phase-inverted and cocontinuous. Also of interest herein are the homogeneous and particulate morphologies. Phase-inverted is a term of art which simply stated is a resin system wherein the volume dominant component in the resin body is the discontinuous phase and the volume subservient component is the continuous phase. This phase-inverted resin system has been euphemistically described as "islands in the sea". Figure 1 is a transmission electron micrograph (TEM) at 50 microns per centimetre magnification which best illustrates the phase-inverted resin system.

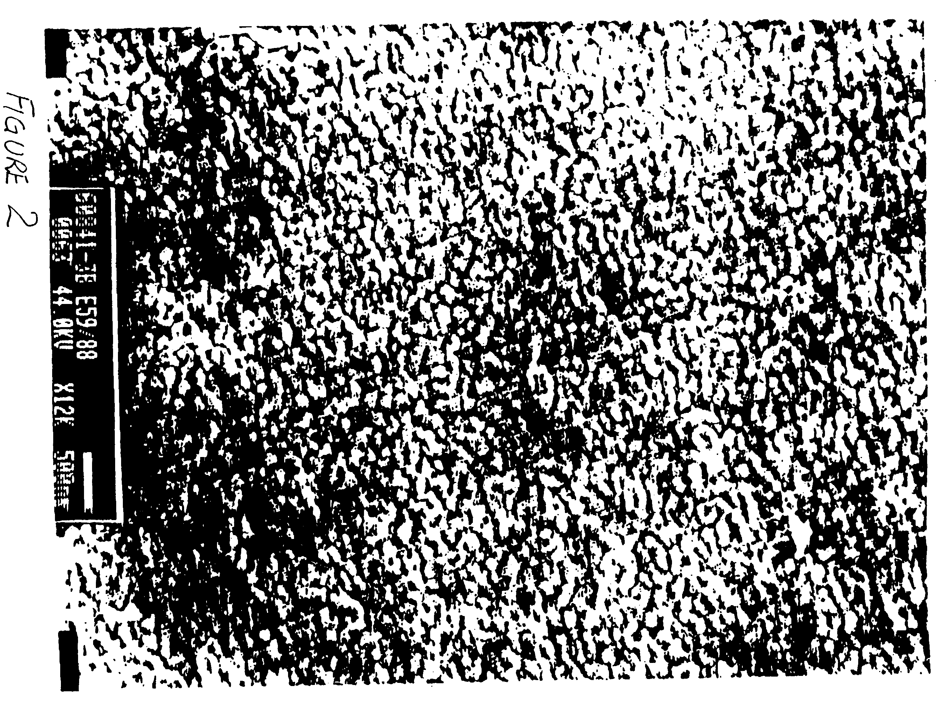

The cocontinuous phase has been penned a "can of worms" due to to its morphological appearance. By continuity is meant, two phases co-existing within the resin system in which neither phase is discontinuous as distinguished from the phase-inverted wherein one phase is discontinous. Figure 2 is a micrograph of similar magnification to Figure 1 and shows a cocontinuous morphology.

The remaining two morphologies, homogeneous and particulate, are distinguished as follows: Homogeneous exhibits no morphology features, while particulate exhibits specks on a homogeneous field. Combinations of each of these morphologies have been observed in samples to some extent but such combinations have not been found to have a deleterious effect on resin body properties.

Phase-inverted and cocontinuous morphologies are the preferred morphologies of the present invention. Of particular note, the present invention enables the practitioner of this art to obtain one morphology in preference to others based on resin system composition and process parameters. The import of these morphologies is related principally to the maintenance of stiffness and service temperature while increasing the toughness of the resin. The phase-inverted and cocontinuous morphologies provide significant macromolecular structure within the resin body. The homogeneous and particulate morphologies tend to be less tough which may be related to the lack of macromolecular structure.

Molecular weight of the thermoplastic component has been found to play a significant part in the resultant morphology. Predictability of molecular weight has been a problem in the polymer art and has, at times, taken on the trappings of a black art. Various definitions of molecular weight have been authored and can be traced to the means of determination. Most common in this art are end group analysis and some kind of sieving, separation, and/or physical property technique. End group analyses includes most of the energy/mass analysis techniques such as infrared and ultraviolet analysis, mass spectrometry, and nuclear magnetic resonance (NMR). NMR provides a convenient method for end group analysis but may be in error up to about 10%. The sieving, separation, and physical property techniques include by way of example gel permeation chromotography, size exclusion chromatography, membrane osmometry and reduced viscosity measurements. These techniques usually give average number molecular weight and may be generally in error by about 10%.

Molecular weights of the thermoplast of less than 35,000 grams per mole and a polydispersity of less than 3.0 have been found to be advantageous for the present invention. The range for polydispersity for the present invention is from about 2.0 to 4.0. Simply, polydispersity is a measure of the distribution of polymer molecular weights within the thermoplast

The present invention characterises some of the parameters which may be used to provide controllably formed morphologies. The chemical reactivity, solubility, molecular weight and percent incorporation of the thermoplast combine to produce the observed morphologies.

The weight percent thermoplast incorporated into the resin body is functionally related to the physical morphology. Increasing the weight percent of thermoplast to about 15% increases the propensity to form a continuous minor thermoplastic rich phase. Thermoplast weight percent greater than 15% leads to a phase-inverted, cocontinuous, and/or combination of these phase morphologies. Additionally, a thermoplastic weight percent less than 15% in the resin body favours formation of homogeneous and/or particulate morphologies. Monomers used to engineer the thermoplast control the solubility parameter of the thermoplast which may promote or inhibit interaction with the thermoset component. A close match of the solubility parameters of the thermoplast and thermoset promotes desirable interaction between the two components favouring cocontinuous morphology. Large differences in solubility favours separation of phases or the phase-inverted morphology.

The thermoplastic and thermoset components are combined in a reaction vessel. The combination is mixed with a solvent to form a dispersion, preferably a single phase solution. It is preferred that the solvent boil under 100°C at 1 atmosphere. Alternatively, the components or their precursors are combined by hot-melt or high shear mixing. This mixture is stirred until essentially but not necessarily homogeneous. Any solvent present evaporated to concentrate the composition. The composition is cured between 100° to 250°C. The curing provides a thermoplastic and thermoset resin system which forms the resin body wherein specific morphologies are formed.

The resin body is well suited for the fabrication of load-bearing and/or impact resistant articles. To further strength the body, fibres are added as a reinforcing agent. Short or chopped fibres, mean length of up to 2 centimetres, optionally at a preferable concentration of 5-35 weight percent, most preferably 20%. For structural applications it is preferred to use 30-70 weight % continuous fibre such as glass or carbon, most preferred is 50-70% by volume.

Contemplated fibres that give strength to the resin body may be inorganic such as glass fibres such as "D", "E" or "S", quartz, alumina, zirconia, silicon, carbide, silicon nitride, aluminosilicates, SIALONS, rare earth oxides, other common ceramic and metal fibres and/or whiskers. A preferred fibre is carbon such as graphite fibres, sized or unsized. A preferred combination is carbon or graphite fibres, sized or unsized, with epoxy resin precursor or thermoplast such as polyarylsulphone or polyimide. Inorganic fibres are preferably sized with a material that bonds to the fibre and to the polymer composition. Examples are the organosilane coupling agents applied to glass fibres.

The resin body may contain reinforcing agents that may be in the form of particulates and/or fibrils exampies of which are rubbers having reactive groups, aggregates such as glass beads, rubber and/or thermoplast particles or rubber balls, rubber coated glass beads, fillers such as graphite, polytetrafluoroethylene, boron nitride, mica, talc, vermiculite, pigments, nucleating agents, and stabilisers such as phosphates. The total volume percent of reinforcing agents should preferably not exceed 80 volume percent of the resin body. The volume percent of fibres and other materials are calculated on the total composition of the resin body after curing at up to 250°C.

The precured resin system can be used as an adhesive coating and/or for moulding purposes. Short fibre reinforcement adds strength to the precured resin system providing extra rigidity for forming purposes. The precured resin system can also be made into a film, compression moulded, extruded, melt casted, belt casted, and/or laminated. Laminating films to fibrous reinforcing agents can be combined in the form of a nonwoven mat of relatively short fibres, a woven cloth or substantially continuous fibre at conditions of temperature and pressure sufficient to mix, flow, and impregnate the fibres, curing the resultant laminate to a hard body.

Plies of impregnated fibrous reinforcing agents, also known as prepreg, can be laminated by heat and pressure, such as compression moulding or heated rollers, at a temperature above the curing temperature of the thermoset resin, or if the cure has taken place, above the glass transition temperature. Preferably at a temperature of 120°C, more preferably at 170°C. The respective pressures are preferred at 14.5 psi up to and preferably not greater than 250 psi.

The resultant multi-ply laminate body may be anisotropic whereby the fibres are oriented substantially parallel or quasi-isotropic wherein each ply of fibre orientation are at different angles to the normal plane, for example 30, 60, and/or 90° or somewhere in between. Laminates usually contain 4 ply and more preferably 8.

### Description of the Preferred Embodiments

The following examples further define the above said invention and are not intended as a limitation thereto.

### Example 1

A polymer composition was made from the following components: 25 weight percent polyarylsulphone (TP3) derived from; 40 weight percent PES, 60 weight percent PEES (wherein a - 1 as defined hereinabove), with the following properties RV=0.24 (reduced viscosity); Tg-198°C and greater than 90% NH₂ end groups. 35 weight percent of cyanate oligomer derived from the phenoldicyclopentadiene adduct, XU71787.02L (Dow Chemical, Midland, MI) 30 weight percent of a cyanate monomer 1,1-diphenylethane-4,4'-dicyanate and 10 weight percent of the diglycidyl ether of bisphenol-F. The cyanate oligomer was premelted at 80-90°C and added to a solution of said thermoplast in methylene chloride 25% w/v. The cyanate monomer was added to the solution and the solvent was removed by heating to 160°F (71°C). When the volatiles level was reduced to 10%, the epoxy was added to the mixture and the volatiles level reduced to 3%. 2-6 weight percent solution of copper acetylacetonate (1% in nonylphenol) was stirred in the mixture for 5-10 minutes at 160°F (71°C). The mixture was then cooled to ambient temperature.

A sample of the mixture was impregnated on to unidirectional carbon fibre, IM7 obtained from Hercules Incorporated, Wilmington, DE, at a resin content of 35% by weight and a fibre areal weight of 145 g/m². The tape was cured in a heating cycle as follows: heat rate was 2°F(1°C)/min; lh hold at 250°F (121°C); 4h at 350°F (176°C) at 100 psi; followed by 2h postcure at 450°F (232°C).

Samples of impregnated tape were subjected to standard tests. A sample of neat resin was subjected to cure and examined microscopically. It was observed to have a co-continuous network. The above formulation was repeated using a fibre from BASF G40-800. Table 1 shows the tensile strength, compression strength, the shear modulus G₁₂, and compression after impact values for samples made from this composition.

**Table 1**

| | | IM7 | | G40-800 | |
|---|---|---|---|---|---|
| 0° Tensile str, ksi | | 370 | | 399 | |
| 0° Tensile mod, Msi | | 21.7 | | 21.0 | |
| 0° Tensile stn, % | | 1.61 | | 1.72 | |
| | | | | | |
| 0° Comp str, ksi | DRY | *WET | DRY | | *WET |
| RT | 175 | | 213 | | |
| 250°F (121°C) | 160 | 164 | 205 | | 195 |
| 300°F (149°C) | 177 | 172 | 145 | | 160 |
| | | | | | |
| G₁₂, Msi | DRY | **WET | DRY | | **WET |
| RT | 0.57 | | 0.55 | | |
| 250°F (121°C) | | 0.41 | | | 0.47 |
| 300°F (149°C) | | 0.36 | | | 0.40 |
| 325°F (163°C) | | 0.36 | | | 0.34 |
| | | | | | |
| CAI, ksi | | | | | |
| 1500 in 1b/in | 35 | | 36 | | |
| | | | | | |
| EDS, ONSET, ksi | 36 | | 42 | | |

| | | | | | |
|---|---|---|---|---|---|
| * wet = 7 days immersion at 160°F (71°C). | | | | | |
| ** wet = 85% RH at 150°F to equilibrium | | | | | |

### Example 2

Example 1 was repeated increasing the polyarylsulphone (TP3) composition to 35 weight percent, the monomeric cyanate: 1,1 diphenyl-ethane-4,4' -dicyanate present at 45 weight percent, the cyanate of the phenol/ dicyclopentadiene adduct and the epoxy present at 10 weight percent each. The fibre was G40-800 as cited above, the cure was as follows: heat up at 2°F(1°C)/ruin; hold at 210°F (99°C) for 1 h; hold at 350°F (176°C) for 3 h at 100 psi; postcure at 450°F (232°C) for 2 h.

The results for this system are given below. A sample of the neat resin was examined microscopically and observed to have a co-continuous morphology. Table 2 shows representative properties of samples from this composition.

**Table 2**

| | |
|---|---|
| G₁₂ RT, Msi 0.63 | |
| 250°F (121°C)/wet | 0.52 |
| 270°F (132°C)/wet | 0.46 |
| 300°F (149°C)/wet | 0.38 |
| | |
| CAI, 1500 in lb/in = 43 ksi | |

**Table 3**

| | Flex str | Flex Mod | K_{1c} | G_{1c} |
|---|---|---|---|---|
| | ksi | Msi | in¹/²ksi | in1b/in² |
| AROCY B30 | 24.1 | 0.50 | 0.73 | 0.97 |
| XU 71787 | 24.9 | 0.50 | 0.75 | 1.09 |
| B30/L10 | 24.2 | 0.45 | 0.86 | 1.68 |
| B30/L10/TP1 | 22.3 | 0.45 | 1.29 | 2.86 |
| B30/L10/TP2 | 22.2 | 0.46 | 1.14 | 2.51 |
| B30/L10/TP3 | 23.5 | 0.47 | 0.85 | 1.26 |
| B30/L10/TP4 | 22.3 | 0.43 | 1.14 | 2.57 |
| Example 1 | 19.3 | 0.48 | 1.07 | 2.10 |
| Example 1A (30% TP3) | 20.3 | 0.49 | 1.13 | 2.63 |

Neat resin screening results for cyanates are presented in Table 3. wherein
TP1 = copolymer of dichorodiphenylsulphone (50 mol%), bisphenol-S (45 mol %) and biphenol (5 mol%). Morphology was phase inverted when used in the cyanate system.
TP2 = copolymer as for TP1 except ratio of bisphenol-S to biphenol was 35:15 mol%. Morphology was co-continuous when used in the cyanate system.
TP3 = copolymer of dichlorodiphenylsulphone (50 mol%), bisphenol-S (20 mol%) and hydroquinone (30 mol%). Morphology was homogeneous/fine particulate when used in the cyanate system.
TP4 = copolymer of 4,4'-bis[parachlorobenzenesulphonyl] biphenyl (50 mol%), bisphenol-S (30 mol%) and biphenol (20 mol%). Morphology was a complicated array of phase inverted and co-continuous when used in the cyanate system.
TP5 a polymer of 4,4'-bis[parachlorobenzenesulphonyl] biphenyl (50 mol %) and bisphenol-S (50 mol%)

The thermoplastic component characteristics are given in Table 4.

### Example 3

Twenty weight percent of the thermoplast TP3 was dissolved in methylene chloride. The solution was added to a mixture consisting of 48 weight percent of 4,4'-methylenedianiline bismaleimide (MDABMI) and 32 weight percent o,o'-diallyl-bisphenol A (DABA), obtained from Ciba-Geigy under the trade name Matrimid 5292B. While mixing thoroughly, the temperature was raised to 160°F (71°C) to aid the removal of solvent. Stirring was continued to reduce the volatiles level in the resin to less than 3%, at which point the resin was cooled to ambient temperature.

A sample of the resin was degassed and cured as follows using a heat rate of 2°F(1°C)/min: 1 hour hold at 250°F (121°C); 4 hours at 350°F (176°C) at 100 psi; 12 hours at 440°F (227°C). G_{1c} was determined and a fracture surface of the resin casting was examined and found to exhibit a phase-inverted morphology. Resin test results and morphologies are summarised in Table 5.

### Example 4

Example 3 was repeated with thermoplastic TP5.

### Example 5

Example 3 was repeated with 39 weight percent MDABMI, 26 weight percent DABA, 20 parts TP3. When the volatiles level was reduced to 10 weight percent, 0.5 weight percent hydroquinone and 15 weight percent of a dimethacrylate resin sold under the trade name SR-348 by Sartomer Co., were added. Stirring was continued to reduce the volatile level in the resin to less than 3%, at which point the resin was cooled to ambient temperature. A prepreg tape containing 35 ± 2 weight percent uncured resin was prepared by hot-melt impregnation of the resin onto unidrectionally laid intermediate modulus continuous fibres, IM7, manufactured by Hercules Incorporated. Laminates were prepared with plies of the prepreg using the cure cycle outlined above. Typical mechanical and physical properties of these laminates are provided in Table 5 alongside those of FIBERITE 986, a commercial bismaleimide system, for purposes of comparison.

### Example 6

Example 5 was repeated with the reactive epoxy resin modifier sold under the trade name DER 332 by Dow Chemical Company, Midland, MI.

### Example 7

Example 6 was repeated with 36 weight percent MDABMI, 12 weight percent of a eutectic bismaleimide mixture marketed under the trade name COMPIMIDE 353 by Technochemie Gmbh, 26 weight percent DABA, 20 weight percent TP3 and 6 weight percent of diglycidyl-bisphenol-F resin.

### Example 8

Example 7 was repeated with 57 weight percent COMPIMIDE 353, 38 weight percent DABA, 5 weight percent of the thermoplastic polyimide marketed by CIBA-GEIGY under the trade name Matrimid 5218.

### Example 9

Example 1 was repeated with all 35 weight percent of XU71787.02L replaced with XU71787.07L (Dow Chemical, Midland MI). XU71787.07L and XU 717187.02L contain the same cyanate ester, however, XU71787.07L contains 10 weight percent ABS elastomer. The K_{1c} was 1.33 in½ ksi (1.45 M½MPa) and the G_{1c} was 4.49 inlb/in². (786 J/M²).

Laminates of the present invention were mechanically tested. For cured laminates, Compression After Impact (CAI), compressive strength (comp str) tests were routinely carried out. Samples were loaded to failure in compression following a standard 1500 in1b/in² (66.9 Jcm⁻¹) impact, as outlined in the Boeing Material Specification 82/76.

Compressive strength was obtained according to ASTM D695 on an [0]8 ply laminate. In-plane shear determination was carried out per GD F2003B specification on an [±45]_{2S} 8 ply laminate. Edge delamination was also performed per the same GD spec on an [±25)₂90]_{S} laminate. Hot/wet testing was carried on the relevant samples according to the specification used, where no specification was used the moisture conditioning was either 7 days at 160°F or 14 days at the same temperature. The soak time was generally 2 minutes at test temperature, unless specified.

**Table 4**

| TP | Mn | RV | Tg | End Group | |
|---|---|---|---|---|---|
| TP1 | 13,000 | 0.25 | 229 | OH | 90% |
| TP2 | 13,700 | 0.27 | 221 | OH | 90% |
| TP3 | 11,000 | 0.24 | 198 | NH₂ | 90% |
| TP4 | 13,100 | 0.28 | 253 | OH | 80% |
| TP5 | 8,000 | 0.22 | 246 | NH₂+OH | 95% |

Table 5 shows the results of G_{1c} and morphology determinations for six of the Examples.

**Table 5**

| RESIN PROPERTIES | | | |
|---|---|---|---|
| MATERIAL | TP | G_{1C}, inlb/in² | MORPHOLOGY |
| Example 3 | TP3 | 2.13 | phase inverted |
| Example 4 | TP5 | 2.11 | phase inverted |
| Example 5 | TP3 | 1.41 | phase inverted |
| Example 6 | TP3 | 1.25 | co-continuous |
| Example 7 | TP3 | 1.44 | co-continuous |
| Example 8 | polyimide | 2.13 | phase inverted and particulate |

Table 6 shows the physical property results of laminated material.

**Table 6**

| LAMINATE DATA | | | | |
|---|---|---|---|---|
| SYSTEM | Example 5 | Example 6 | Example 7 | 986 |
| FIBRE | IM7 | IM7 | IM7 | IM7 |
| COMPRESSION AFTER IMPACT (CAI), ksi | | | | |
| | 23 | 26 | 29 | 18 |

| EDGE DELAMINATION STRENGTH (EDS) (ONSET), ksi | | | | |
|---|---|---|---|---|
| | 34 | 37 | 31 | 23 |
| G₁₂, Msi | | | | |
| 300°F/Wet | ---- | ---- | 0.48 | 0.43 |
| 325°F/Wet | 0.39 | 0.38 | 0.41 | 0.40 |
| Wet = 85% RH at 150°F to equilibrium | | | | |
| | | | | |
| 0° COMPRESSIVE STRENGTH, ksi | | | | |
| | | | | |
| RT | 203 | 235 | 229 | 242 |
| 300°F/Wet | 181 | 190 | 193 | 159 |
| 325°F/Wet | 152 | 200 | 183 | 162 |
| 350°F/Wet | 121 | 137 | 170 | 167 |
| Wet = 7 day immersion at 160°F | | | | |
| CURE: 4h AT 350°F; POSTCURE 12h at 440°F | | | | |

## Claims

1. A curable composition comprising a thermoset component, a thermoplast component, a coreactant and optionally a catalyst and a radical quencher wherein:-
a) said thermoset component represents from at least 30 weight percent of the curable composition;
b) said thermoplast component being a copolymer of a polyethersulphone and a polyetherethersulphone represents from 15 to 40 weight percent of the curable composition and consists essentially of a polyarylsulphone containing ether - and /or thioether-linked repeating units selected from the group consisting of:-
(PhSO₂PhPhSO₂Ph)ₙ
(PhSO₂Ph)ₙ
and
(Ph)ₐ
wherein Ph is phenylene, a=1 or 2, m=1 and n=1 or 2;
c) said coreactant represents from 1 to 50 weight percent of the curable composition and is selected from the group consisting of allyl ether, allyl phenols, propenyl phenols, methacrylates, acrylates, epoxy resin precursors of bisphenol A, bisphenol E, bisphenol F and bisphenol S and combinations thereof;
d) said catalyst represents from 0 to 5 weight percent of the curable composition; and
e) said radical quencher represents from 0 to 5 weight percent of the curable composition;
characterised in that
said thermoset component consists essentially of di- and/or polyfunctional cyanate esters selected from the group consisting of:-
i) one or more compounds, or oligomeric species thereof, of general formula:-
N C O Ar (Yₓ Arₘ)_{q}O C N
wherein m=0 to 5, q=0 to 5 and x=0 up to 2, Ar is a single or fused aromatic or substituted aromatic or combinations thereof linked in ortho, meta or para positions and Y is a linking unit selected from the group consisting of CR₁R₂. P(R₃R₄R'₄R₅), Si(R₃R₄R'₄R₆), oxygen, carbonyl, sulphur, sulphur oxides, chemical bond, aromatic linked in ortho, meta and/or para positions, wherein R₁ and R₂ are hydrogen, halogenated alkanes, substituted aromatics and/or hydrocarbon units singly or multiply linked and consisting of up to 20 carbon atoms for each R₁ and R₂, R₃ and R₅ are alkyl, aryl, alkoxy or hydroxy, R₄ and R'₄, which may be the same, are singly-linked oxygen or a chemical bond and R₅ is doubly-linked oxygen or a chemical bond and
ii) cyanate esters of phenol/formaldehyde-derived Novolaks or dicyclopentadiene derivatives.

2. A composition according to claim one wherein said catalyst is selected from the group consisting of active hydrogen, alkylated phenols, the first, second and third transition series of the periodic chart and combinations thereof.

3. A composition according to any one of the preceding claims wherein said radical quencher is hydroquinone and derivatives thereof.

4. A composition according to any one of the preceding claims which contains reinforcing fibres.

5. A composition according to any one of the preceding claims which contains reinforcing agents in the form of particulates and/or fibrils selected from the group consisting of glass beads, rubber and/or thermoplastic particles, rubber balls, rubber-coated glass beads and/or combinations thereof.

6. A composition according to any one of the preceding claims wherein the thermoplast contains end groups and/or pendant groups of the formula -A-Y where A is optional and a divalent hydrocarbon group, preferably aromatic, and Y is a group that is reactive with one or more components of the thermoset resin in manner to provide chemical bonds bridging the interface between the two phases.

7. A composition according to claim 6 where Y is a group providing active hydrogen, especially -OH, -NH₂, -NHR, or -SH, where R is a hydrocarbon group containing up to 8 carbon atoms.

8. A structure made by curing a composition according to any one of the preceding claims in the form of a composite, film, moulded or cast body, extrudate, laminate or prepreg.

9. A structure according to claim 8 in which there are chemical bonds bridging the interface between the two phases.

10. Method for the manufacture of a composition or structure according to any of the preceeding claims
